# EUROPEAN PATENT APPLICATION

(11) **EP 0 523 650 A2**
(43) Date of publication of application: **20.01.1993**
(21) Application number: 92112060.6
(22) Date of filing: 15.07.1992
(51) Int. Cl.: G06F 9/44

(54) **Object oriented processing method**

(30) Priority: 16.07.1991 JP 175468/91; 16.07.1991 JP 175471/91; 16.07.1991 JP 175470/91; 16.07.1991 JP 175469/91
(71) Applicant: FUJITSU LIMITED, Kawasaki-shi, Kanagawa 211 (JP)
(72) Inventor: Ryu, Tadamitsu, c/o Fujitsu Network Eng. Ltd., Kawasaki-shi, Kanagawa, 213 (JP); Aoe, Shigeru, c/o Fujitsu Network Eng. Ltd., Kawasaki-shi, Kanagawa, 213 (JP); Tojima, Tetsuo, c/o Fujitsu Network Eng. Ltd., Kawasaki-shi, Kanagawa, 213 (JP); Wakabayashi, Shinobu, c/o Fujitsu Network Eng. Ltd, Kawasaki-shi, Kanagawa, 213 (JP); Oshiro, Takashi, c/o Fujitsu Network Eng. Ltd., Kawasaki-shi, Kanagawa, 213 (JP); Tomita, Masao, c/o Fujitsu Network Eng. Ltd., Kawasaki-shi, Kanagawa, 213 (JP); Murakawa, Masahiko, c/o Fujitsu Network Eng. Ltd., Kawasaki-shi, Kanagawa, 213 (JP)
(74) Representative: Lehn, Werner, Dipl.-Ing.

(57) **Abstract**

An object oriented processing method includes the steps of (a) forming first objects which respectively include a single capsule in which a data and a method are integrated, a single data, a single method, a single event in which a plurality of capsules are integrated, a single system in which a plurality of events are integrated, and a single sequence which expresses a sequence of a plurality of events and systems, and (b) expanding the first objects to form a second object which is made up of an arbitrary combination of a plurality of first objects.

## Description

### BACKGROUND OF THE INVENTION

The present invention generally relates to object oriented processing methods, and more particularly to an expanded object oriented processing method which realizes a data structure and a management system which can easily express a complex model by expanding the concept of forming a single capsule from a method and a data of the conventional object oriented processing method and regarding the capsule as an object.

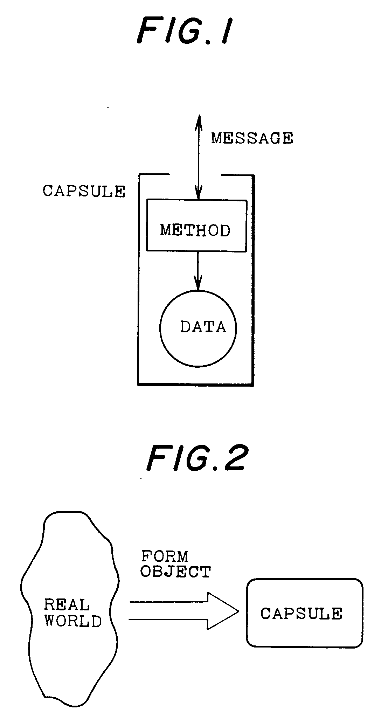

In the conventional computer system, the object oriented programming technique is a useful means of flexibly combining program groups and data groups (hereinafter generally referred to as "parts group") and building a system and managing the parts groups therefor. However, according to the conventional object oriented programming technique, the concept of the object is such that one unit of the capsule made up of a method-and-data pair is regarded as the object as shown in FIG.1. The method corresponds to the program, and the data corresponds to the instance.

The above concept of the object regards a phenomenon as a 2-item relationship which expresses an attribute of a single substance and a relation between two attributes, and expresses the object by the data and the method. For example, in a case where the phenomenon is "a man lives in an apartment", "a man" and "an apartment" are the data, and "lives in" is the method.

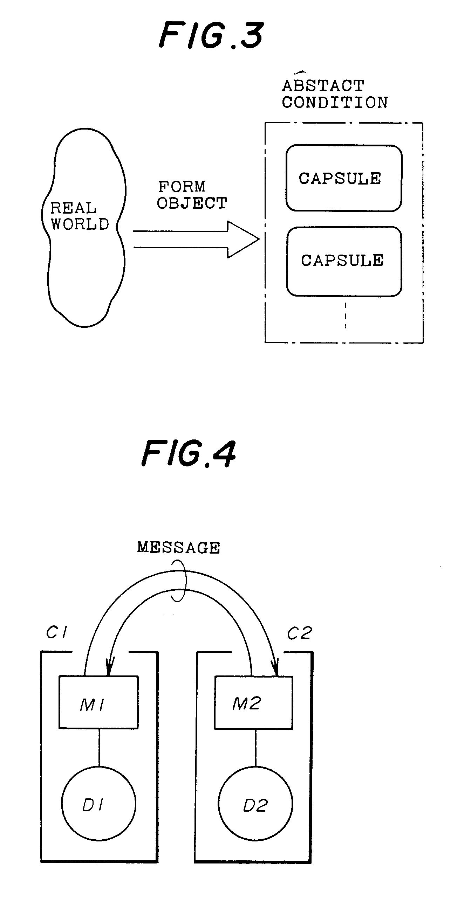

FIG.2 shows a conventional method of building a model of the real world by simply using the object of such a capsule. However, since it is virtually impossible to express a complex model, a composite object in which the capsules are grouped as shown in FIG.3 is used.

The structure which can be expressed by the conventional composite object is only an "is-a" relationship and a "part-of" relationship. The "is-a" relationship is used to process a plurality of data in a subclass by a method of a superclass and a method of a subclass. On the other hand, the "part-of" relationship starts a method in a class lower than or equal to that of the "part-of" layer while executing the method.

However, even by use of the composite object, it is difficult to form a complicated link, and it was impossible to express the model of the real world in a simple form.

In addition, the conventional object itself is independent in a self-controlled manner, and the link of the process between the objects is carried out by a message communication between the objects as shown in FIG.4, and there is no concept of being controlled by other objects. As a result, it is impossible to treat only the data or only the method as the object, and a flexible management could not be made.

Furthermore, once the object is created and executed, the object is made to remain permanently so as not to disappear. Hence, no management is conventionally made with respect to the renewal such as addition and erasure. For this reason, there was a problem in that it was difficult to make the diagnosis and maintenance operations on the system.

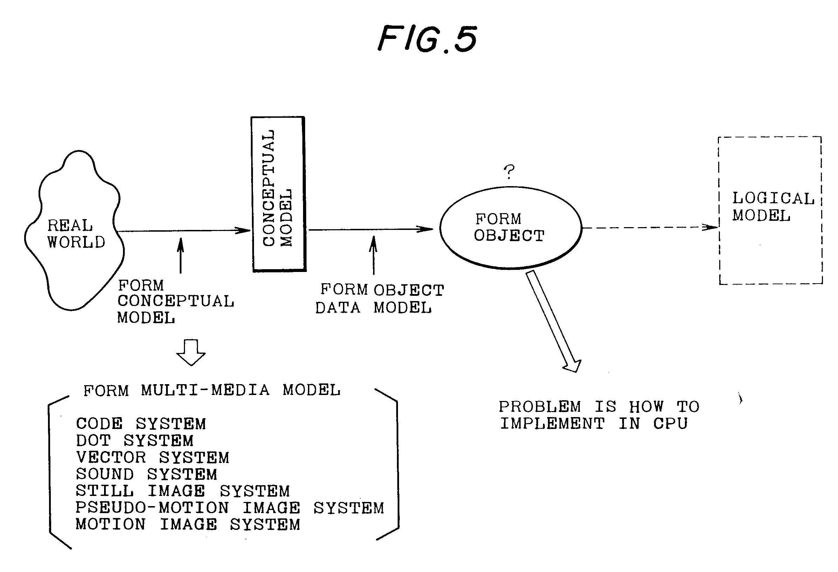

According to the object oriented processing method, a conceptual model of the real world is formed by use of various media such as character codes and images, as shown in FIG.5. This conceptual model is converted into a logical model using the object which has as its unit the capsule made up of a method-and-data (instance-and-program) pair, so as to carry out a processing or management. However, the conventional object oriented processing method mainly processes business data such as numerical values and characters, and was not very suited for a complex system such as a semantic model.

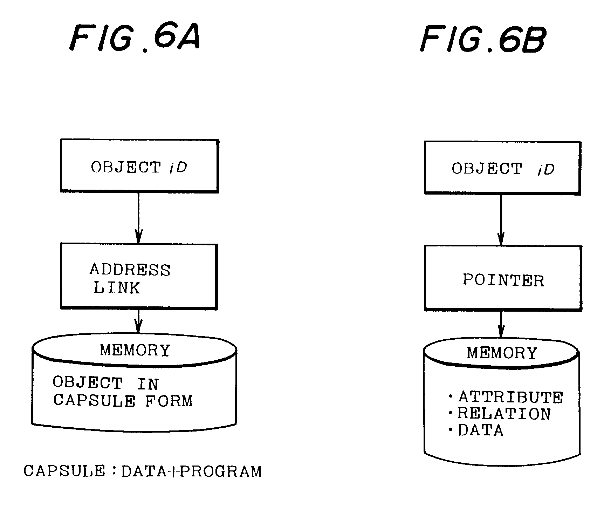

In the conventional object having the capsule as its unit, an object iD is added to the object as an identifier peculiar to the object as shown in FIG.6A, and the data of the object in a memory is extracted by use of an address link. In this case, the attribute of each object, the relationship between the attributes, and the actual data are stored in the memory as shown in FIG.6B, and each of them are referred to by respective pointers. For this reason, it is difficult from the structural point of view to form a complex link among the objects and to add or modify the conditions of the attributes of the objects and the relationships of the attributes. Therefore, it was extremely difficult to build a logical model of a complex system and manage such a complex system.

### SUMMARY OF THE INVENTION

Accordingly, it is a general object of the present invention to provide a novel and useful object oriented processing method in which the problems described above are eliminated.

Another and more specific object of the present invention is to provide an object oriented processing method comprising the steps of (a) forming first objects which respectively include a single capsule in which a data and a method are integrated, a single data, a single method, a single event in which a plurality of capsules are integrated, a single system in which a plurality of events are integrated, and a single sequence which expresses a sequence of a plurality of events and systems, and (b) expanding the first objects to form a second object which is made up of an arbitrary combination of a plurality of first objects. According to the object oriented processing method of the present invention, the building of a complex system using the objects is facilitated, and it is possible to improve the maintenance of the system by an innovation/version management.

Still another object of the present invention is to provide the object oriented processing method described above wherein the first objects are stored in a parts repository in a retrievable manner and in a primitive part form, the second object is made up of the first objects which are connected in a sequence, and the object oriented processing method further comprises the steps of (c) making a simulation by executing the second object depending on the sequence, (d) changing the sequence of the second object or changing the object of a used part if a result of the simulation in the step (c) does not satisfy a predetermined demand, (e) registering the second object in the parts repository as a new part if the result of the simulation in the step (c) satisfies the predetermined demand, and (f) operating the second object in a computer by use of a kernel object. According to the object oriented processing method of the present invention, it is possible to more easily utilize common parts when designing a program, and the designing time can be shortened and the burden of the operation are both considerably reduced. In addition, only a small memory space is required to manage the common part, and it is possible to realize an efficient system.

A further object of the present invention is to provide the object oriented processing method of the type described first above wherein each of the second objects take an object sensor model format which includes a command for identifying the object, a data stored in a memory, and a link to the data. According to the object oriented processing method of the present invention, it is possible to simply set the link with respect to the program groups and data groups which are used as parts, even if the system structure is considerably complex, when building a system by combining a plurality of program groups and data groups in a computer or managing the program groups and data groups which form the built system. In addition, the system design and maintenance management are facilitated.

Another object of the present invention is to provide the object oriented processing method of the type described first above which further comprises the steps of (c) managing the first objects which include at least a program group and a data group by identifying the first objects by a command peculiar to each first object, (d) forming a meta data which expresses a structure formed by a plurality of commands and managing the meta data as a first object in an identifiable manner by a command peculiar to the meta data, and (e) managing the combination and a sequence of the first objects of the second object by use of the meta data. According to the object oriented processing method of the present invention, the program and the data are independently formed into the objects and are subjected to the parts management by the commands. In addition, the object is integrated with an object group of capsules, events, systems and the like and formed into a part. The command of the meta data manages the combination or sequence having as its element an arbitrary command of the object of such a part. Moreover, because the meta data itself can be managed as a part similarly to other data, it becomes possible to build a complex logical model with ease.

Still another object of the present invention is to provide a program execution system which is implemented on a computer and processes an object oriented program, comprising a parts repository for storing primitive objects in a retrievable manner and in a primitive part form, means for forming a composite object by connecting the primitive objects extracted from the parts repository in a sequence, simulation means for simulating an execution of the composite object according to the sequence thereof, program correction means for changing the sequence of the composite object or changing the object of a used part if a result of the simulation does not satisfy a predetermined demand, registration means for registering the composite object in the parts repository as a new part if the result of the simulation satisfies the predetermined demand, and a kernel object for operating the composite object in the computer. According to the program execution system of the present invention, it is possible to simply set the link with respect to the program groups and data groups which are used as parts, even if the system structure is considerably complex, when building a system by combining a plurality of program groups and data groups in a computer or managing the program groups and data groups which form the built system. In addition, the system design and maintenance management are facilitated.

A further object of the present invention is to provide a data management method implemented in a computer and comprising the steps of (a) managing parts of parts groups which include at least a program group and a data group by identifying the parts by a command peculiar to each part, (b) forming a meta data which expresses a structure formed by a plurality of commands and managing the meta data as a part in an identifiable manner by a command peculiar to the meta data, and (c) managing a combination of arbitrary parts and a sequence of parts by use of the meta data. According to the data management method of the present invention, the program and the data are independently formed into the objects and are subjected to the parts management by the commands. In addition, the object is integrated with an object group of capsules, events, systems and the like and formed into a part. The command of the meta data manages the combination or sequence having as its element an arbitrary command of the object of such a part. Moreover, because the meta data itself can be managed as a part similarly to other data, it becomes possible to build a complex logical model with ease.

Other objects and further features of the present invention will be apparent from the following detailed description when read in conjunction with the accompanying drawings.

### BRIEF DESCRIPTION OF THE DRAWINGS

FIG.1 is a diagram for explaining a message communication using a conventional capsule made up of a method-and-data pair;
FIG.2 is a diagram for explaining the concept of a conventional object;
FIG.3 is a diagram for explaining the concept of a conventional composite object;
FIG.4 is a diagram for explaining a message communication between the conventional capsules;
FIG.5 is a diagram for explaining a conventional object oriented processing method;
FIGS.6A and 6B are diagrams for explaining a conventional link structure;
FIG.7 is a diagram for explaining the operating principle of a first embodiment of an object oriented processing method according to the present invention;
FIG.8 shows the kinds of object used in the first embodiment;
FIG.9 is a diagram for processing a composite object in the first embodiment;
FIG.10 is a diagram for explaining a renewal of the object in the first embodiment;
FIG.11 is a diagram for explaining an innovation/version management in the first embodiment;
FIGS.12A through 12C are diagrams for explaining conventional systems of forming the program into parts;
FIG.13 is a diagram for explaining the operating principle of a second embodiment of the object oriented processing method according to the present invention;
FIG.14 is a diagram for explaining a composite object and a primitive parts forming process of the second embodiment;
FIG.15 is a diagram for explaining simulation and kernel developing processes of the second embodiment;
FIGS.16A and 16B respectively show objects used in a third embodiment of the object oriented processing method according to the present invention and an object sensor model and a link used in the second embodiment, for explaining the operating principle of the third embodiment;
FIGS.17A and 17B are diagrams for explaining the unit of the object sensor and the meta data processing in the third embodiment;
FIG.18 is a system block diagram for explaining the link process of the object using the meta data in the third embodiment;
FIG.19 shows an embodiment of a gathering meta data structure;
FIG.20A shows an example of a process flow for explaining a sequence meta data structure; and
FIG.20B shows an embodiment of the sequence meta data structure with respect to the process flow shown in FIG.16A.

### DESCRIPTION OF THE PREFERRED EMBODIMENTS

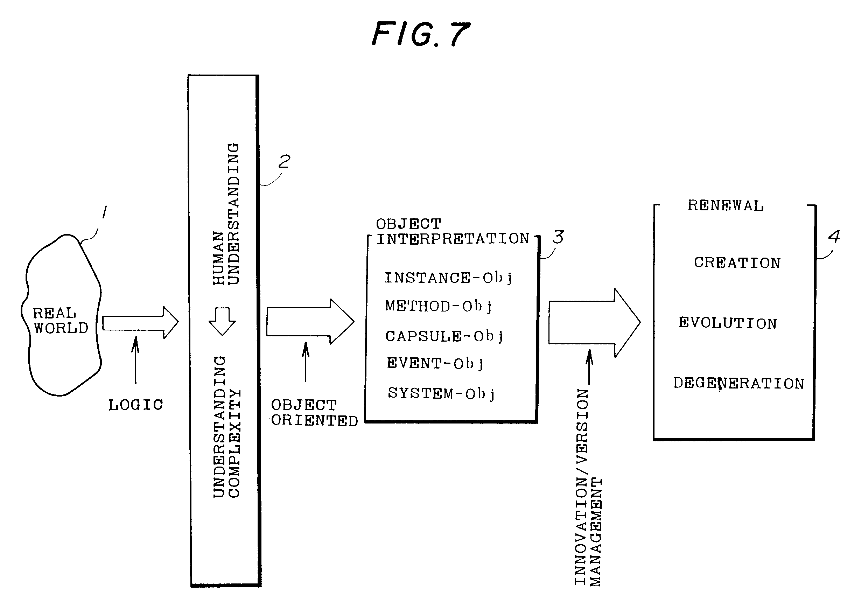

First, a description will be given of the operating principle of a first embodiment of an object oriented processing method according to the present invention, by referring to FIG.7.

In FIG.7, the complexity of a real world 1 is recognized by by human understanding 2 based on logic. An objective thought is made by using various objects such as instance (data) objects and system objects according to an object interpretation 3. A renewal 4 takes place when an object is created, evolved or degenerated. In other words, past data are automatically kept, and an innovation version management is carried out.

In the present invention, the data and the method are respectively treated as an object. As a result, the process flow expression is facilitated because the other object may be regarded as the data and the object of simply the method may be assigned as a control object ("if-then" object) or, the other object may be regarded as the method and the object of simply the data may be assigned as an other-controlled object (that is, the processing content is controlled by the another object).

In addition, by using an integrated object of event objects and system objects, the expression of the relationship with respect to a group of hierarchical objects is facilitated.

The structure of such objects facilitates the linking and management of the renewed object under an arbitrary condition or rule. Hence, when making a design modification or an abnormality diagnosis of the system, it is possible to efficiently retrieve the desired object in which the innovation was made and also simplify the management of the version.

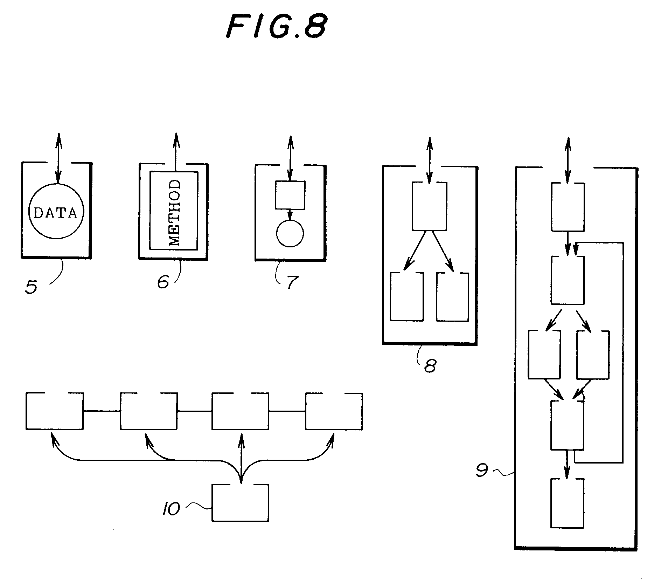

Next, a description will be given of the first embodiment of the object oriented processing method according to the present invention. FIG.8 shows the kinds of objects used in this embodiment. In FIG.8, a data object 5 is made up solely of the data, a method object 6 is made up solely of the method, a capsule object 7 is made up of the data and the method similarly as in the conventional case, a composite object 8 is made up of a control object which carries out a decomposition control of an "if-then" relationship and an other-controlled object, a general composite object 9 which has a more complex process flow, and a sequence object 10 which manages the sequence link between the composite objects. The sequence of the general composite object 9 is managed by use of the sequence object 10.

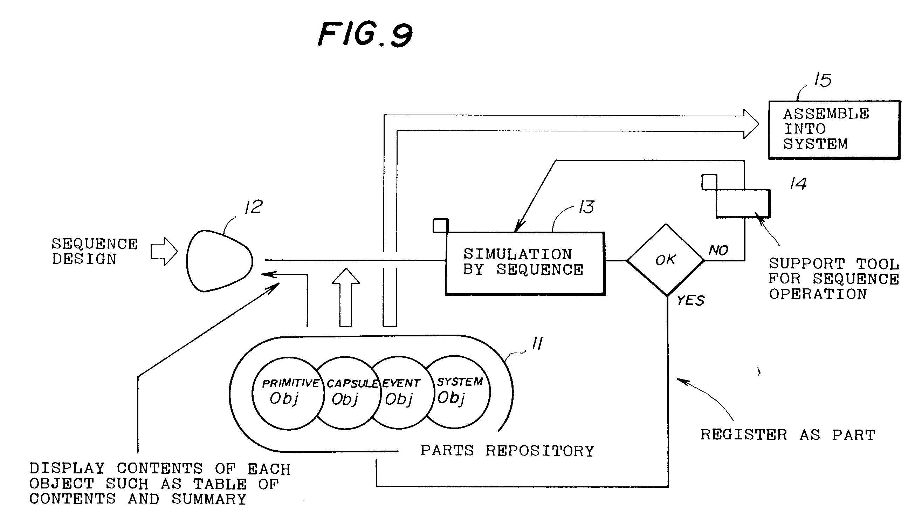

FIG.9 shows the process of forming the composite object in this embodiment. In FIG.9, primitive objects of data and methods, capsule objects, event objects, system objects and the like are managed as parts in a parts repository 11.

An input/output unit 12 includes a display, a keyboard and the like. When designing the sequence, the user makes a question or a retrieval request, and the table of contents or summary of each object registered in the parts repository 11, the detailed contents of the individual object and the like are displayed on the display. The user through interaction utilizes the appropriate parts obtained by the interaction and designs the desired sequence.

A simulation process 13 is carried out to debug the designed sequence. This simulation is carried out in an interpreter format while making a message communication between the objects in units of objects, and the processing speed thereof is therefore slow. If the simulation is successful, the designed sequence is registered in the parts repository 11 as parts. On the other hand, the designed sequence is modified if the simulation fails.

A support tool 14 is used for carrying out the sequence design operation. If the target result and the actual result do not match in the simulation, the correcting function of the support tool 14 is used to match the actual result and the target result in a self-developing manner.

A system implementing process 15 carries out operations including development of the objects obtained from the parts repository 11 into a kernel and generation of code modules by a compiler. The kernel is a kind of management program.

The object parts which are designed and registered in the parts repository 11 are renewed by a design modification and the like.

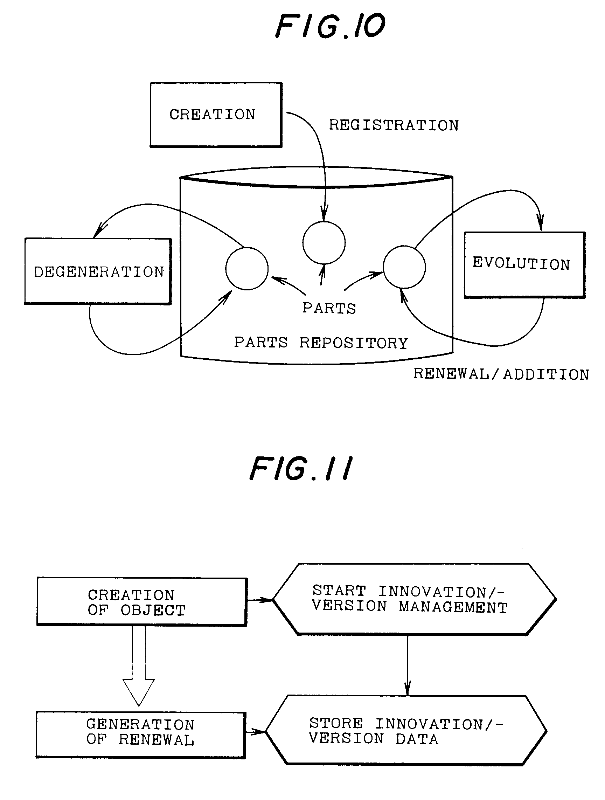

FIG.10 shows the renewal of the object. The object is registered in the parts repository when created, and if the content of the object is improved and evolved, the object is modified/added. The content of the object is not erased even if unnecessary and the object is degenerated.

FIG.11 shows the innovation/version management which is carried out with respect to the renewal of the object. The innovation/version management of the object is started with the creation (that is registration into the parts repository 11) of the object. When the renewal including evolution and degeneration takes place thereafter, the old object is stored without destroying the old object. The old object is managed so that it is retrievable by information such as its name, comment, keyword, other various conditions and rules, innovation level and version level.

Therefore, according to this embodiment, it is possible to build even a complex system from the objects with ease. Further, it is possible to improve the utilization efficiency by the parts and improve the maintenance by the innovation/version management.

Next, a description will be given of another problem encountered in the conventional object oriented program which is formed by use of the objects having the capsule as its unit.

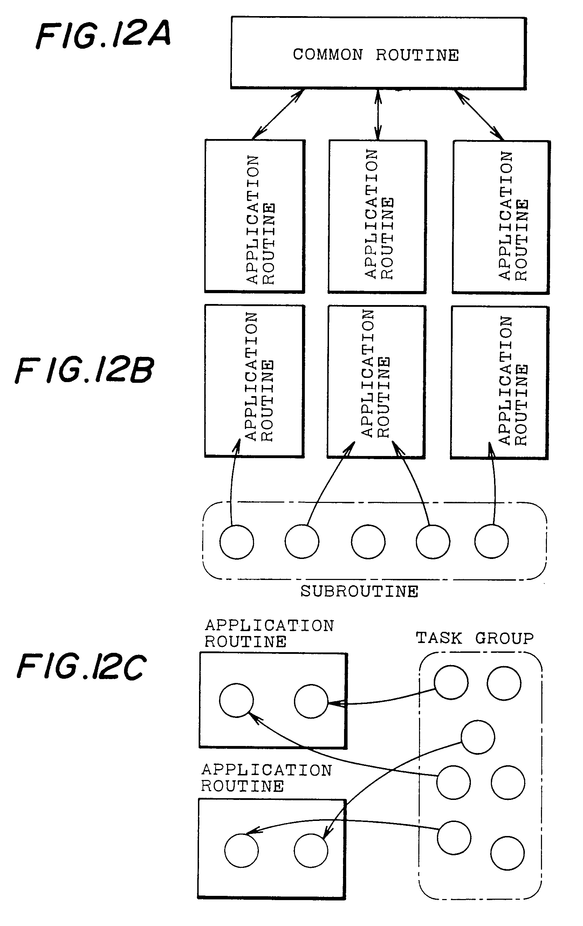

When designing the program, the program is formed into parts in order to reduce the burden of making the program for those processing functions which overlap, and the parts are used when needed. Conventionally, a common routine system, a subroutine system and a task embedding system are generally known as systems of forming the program into such parts. A description will now be given of these systems, by referring to FIGS.12A through 12C.

FIG.12A is a diagram for explaining the common routine system. In FIG.12A, a common routine which has a common processing function with respect to each of application programs is provided. Each application program requests a process to the common routine by a macro instruction or a command.

FIG.12B is a diagram for explaining the subroutine system. An application routine of a main routine shifts the control to the subroutine using a subroutine call instruction or a branch instruction.

FIG.12C is a diagram for explaining the task embedding system. Functions such as a function instruction are prepared as a task group and buried within an application routine at the stage of assembling or compiling the application routine. The buried task group is operated as a part of the application routine when being executed.

However, according to the conventional systems of forming the program into the parts, the following problems existed. In other words, in the case of the common routine system, the system can only be applied to a general processing routine which may be used in common by the application routines. In addition, in the case of the subroutine system, considerable planning must be made before deciding to make the subroutine. That is, it is desirable to keep the number of subroutines down to a minimum and enable the subroutine to be used in common among the application routines. Furthermore, in the case of the task buried system, problems similar to those encountered in the subroutine system exist, and in addition, it is difficult to match the interfaces.

In the systems described above, a routine for judging an error becomes necessary in addition to the normal routine, so as to enable checking of the reliability which becomes a problem when a routine is used in common. As a result, there is a problem in that the scale of the program becomes large.

Next, a description will be given of a second embodiment of the object oriented processing method according to the present invention which eliminates the problems described above when using a routine in common. More particularly, this embodiment facilitates the use of a common part in program designing, and improves the reliability without increasing the amount of programs. Further, this embodiment improves the efficiency of the program at the time of execution.

In this embodiment, the objects of primitive parts which become the basic elements of the program making are registered in a parts repository so that the objects may be utilized. The operation of the program which is made is confirmed by a simulation, and a correction is made if the operation is unsatisfactory. If the operation of the program is confirmed, the objects are registered in the parts repository as parts. When executing the program, the task buried system or the subroutine system may be selected depending on the space of the memory area to which the program is loaded.

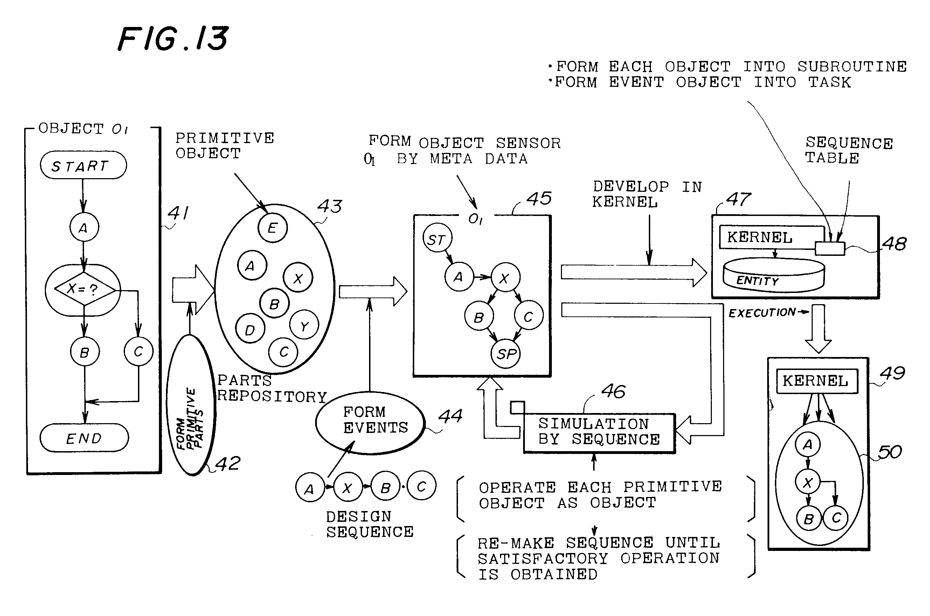

First, a description will be given of the operating principle of this second embodiment, by referring to FIG.13. In FIG.13, a composite object 41 is the design target expressed by O₁. This composite object O₁ for the shown case includes steps A, X, B and C which are capsule objects. The object X is a control object which divides the path by "if-then".

A primitive parts forming process 42 decomposes the composite object and extracts primitive parts of the element. A parts repository 43 manages the primitive parts which are extracted from the composite object.

An event forming process 44 selects appropriate primitive parts from the parts repository 43 and designs the sequence of the process flow. In the case shown, the design target is the same as the composite object 41 (O₁).

An object data 45 has a data structure which will be referred to as an object sensor, and expresses the composite object O₁. The object sensor 45 includes an identifier (that is, command) of the object, a link having an address pointer to the memory, and a data which is stored in the memory and pointed by the link. In this case, the data which is pointed by the link of the object sensor expresses the sequence of the composite object, and the commands of each of the primitive objects are arranged therein. The object sensor which points the command of another object sensor will be referred to as a meta data in order to distinguish such an object sensor from an object sensor which points the real data.

A simulation process 46 executes the composite object which is expressed by the object sensor 45. The simulation is carried out for each individual object within the composite object by making a message communication to link the objects. The operation is considerably slow compared to the link made by the subroutine call instruction, and the program correction and the operation confirmation using simulation are repeated until the sequence as a whole carries out an operation satisfying the design target. When it is confirmed that the operation matches the design target, the composite object is registered in the parts repository 43 as a part.

A kernel developing process 47 develops in a kernel the composite object the operation of which has been confirmed. The object of each element of the composite object is converted into a program having the execution format in one of two modes, that is, according to the subroutine system or the task buried system. Regardless of which system is employed, the operation can be carried out at a high speed compared to the simulation process.

The composite object is developed in the execution format in a sequence table 48. A main program execution process 49 executes the main program. In a program 50 having the execution format, each of the elements of the composite object are coordinated into one program in the subroutine format or the task buried format.

In FIG.13, the program parts which are registered in the parts repository 43 are all confirmed of their operations by the simulation process, and the reliability of the program parts is high. In the simulation process 46, the operation can be confirmed by successively operating each object within the sequence one by one, and although the operation is slow, it is easy to modify the sequence and change the objects. The object of each element of the composite object is stored within the parts repository 43 in the form of primitive parts, and the space utilization efficiency is high. The extraction of the parts of the composite object is linked by the meta data which manages the sequence.

The mode selection in the kernel developing process 47 between the subroutine system and the task buried system is determined by the space of the work area to which the program of the kernel is loaded. The mode selection is first made to select the task buried system which requires a large program size but can operate at the highest speed. If the program size is large compared to the tolerable memory space as a result of this selection, the mode is switched to the subroutine system and the program is developed. In the subroutine system, it is sufficient to load only the required subroutine at the time of execution, and the required memory space is small.

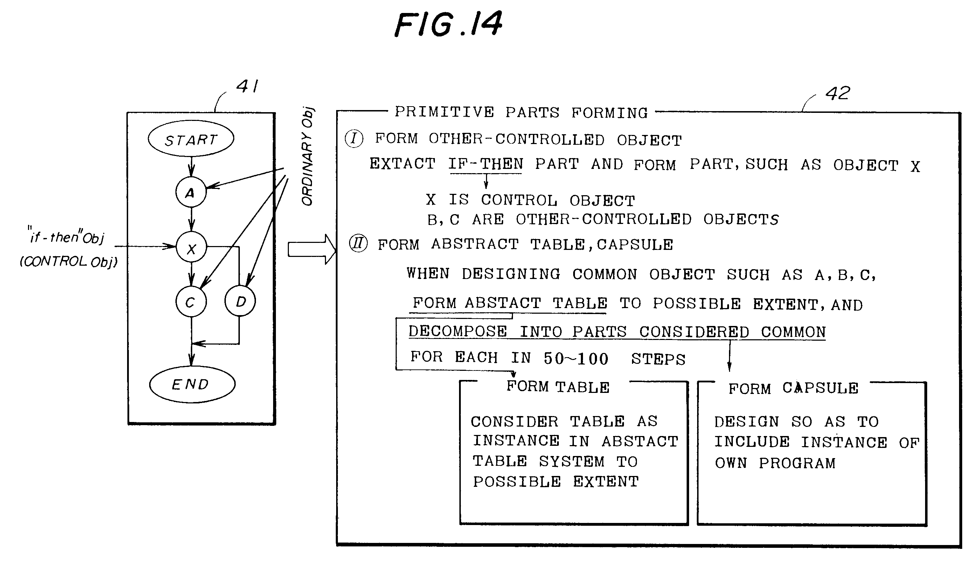

FIG.14 shows an embodiment of the primitive parts forming process 42 shown in FIG.13 together with the composite object 41.

In FIG.14, a case I shows the formation of an exclusive object. In this cases I, the control object X which carries out the "if-then" control is extracted from the composite object 41 and formed into a part. The ordinary objects C and D which are determined of the executing object by the control object X will be referred to as other-controlled objects and divided as parts.

A case II shows the formation of an abstract table and capsule. The ordinary objects such as the objects A, B and C are formed into an abstract table so that these objects may easily be used as a common part. In addition, these objects are decomposed where considered ordinary to form a capsule, and the instance (data) of its own program is designed to be carried within the capsule. In addition, the size of each of the objects is made uniform in a range of 50 to 100 steps.

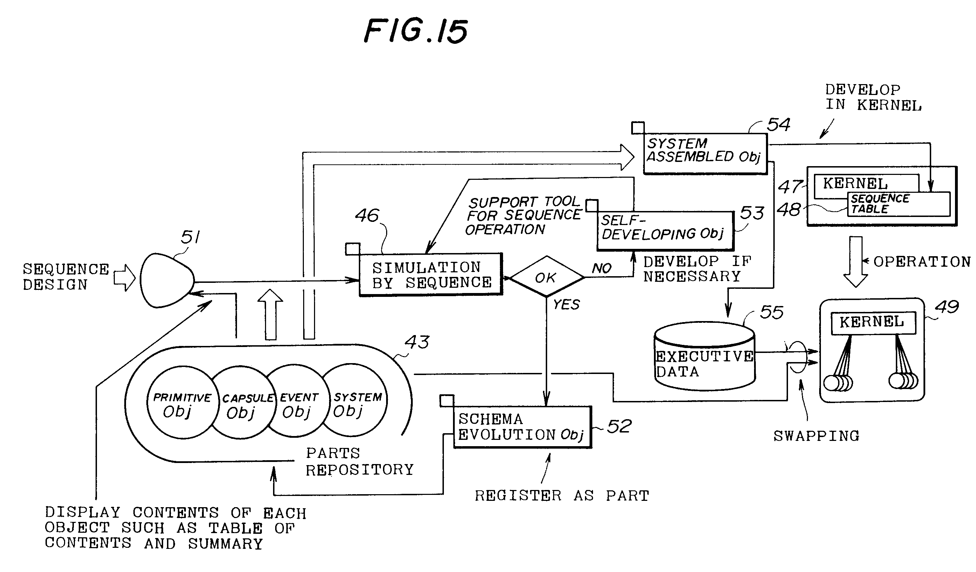

FIG.15 shows an embodiment of the kernel developing process 47 shown in FIG.13. In FIG.15, those parts which are the same as those corresponding parts in FIG.13 are designated by the same reference numerals, and a description thereof will be omitted.

In FIG.15, an input/output device 51 is used by the user to make the design in an interactive manner. A schema evolution object 52 carries out a process of checking various kinds of tables (schema) of the files when registering a newly designed composite object in the parts repository 43 as a part and renewing and evolving to ensure coordination. A self-developing object 53 develops on its own through interaction with other objects. A system assembled object 54 carries out a process of developing the composite object in the sequence table 48 according to one of the modes, that is, the subroutine system or the task buried system. The system assembled object 54 also makes an executive data development (forming a load module) if necessary and makes a file management as an executive data 55.

According to this embodiment, the common use of a part at the time of designing the program is facilitated, and it is possible to considerably reduce the designing time and work load. In addition, the memory space required to manage the common part is relatively small, thereby making it possible to realize an efficient system.

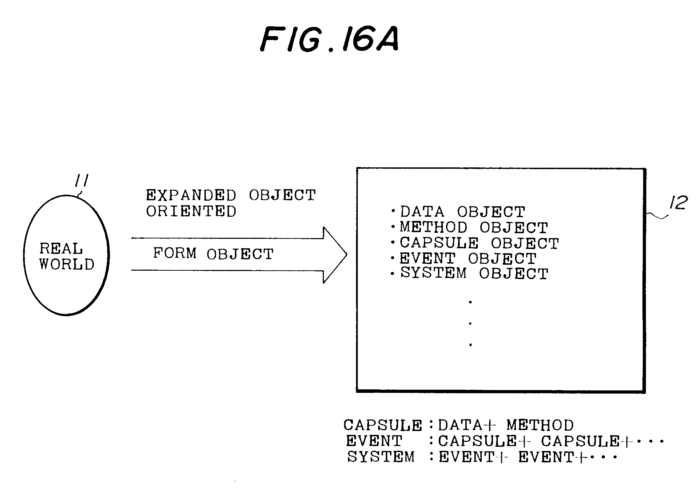

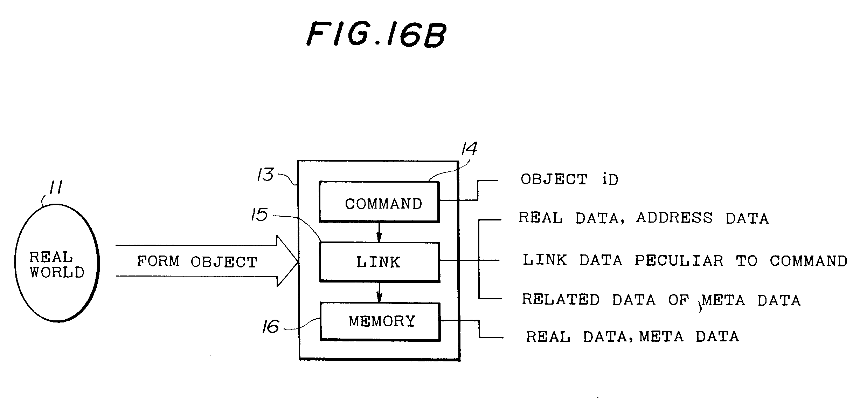

Next, a description will be given of the operating principle of a third embodiment of the object oriented processing method, by referring to FIGS.16A and 16B.

In this embodiment, the unit of the object is not limited to the conventional capsule made up of the data and program, and the data or program itself, the event made up of a group of capsules, a system made up of a group of events and the like are also treated as the object. In addition, in the data structure of the conventional object, the address link including the pointer is expanded in this embodiment, so that it is possible to have in addition to the address data with respect to the real data of the memory which is the same as that of the conventional system link data such as keywords peculiar to the commands describing the correspondence of the commands and the memory data, and link data related to the meta data (special data which relate the command groups) and the real data in the memory.

FIG.16A is a diagram for explaining the method of forming an expanded object, and shows a real world 11 and types of objects 12. When forming a model of a system of the real world 11 using objects, it is possible to use the types of objects 12 of various levels. As shown, the types of objects 12 includes a data object, a method object, a capsule object, an event object, a system object and the like. These types of objects 12 have an arbitrary hierarchical structure.

FIG.16B is a diagram for explaining the contents of a link and an object sensor model which is the format of the object used in this embodiment. FIG.16B shows an object sensor model 13 including a command 14, a link 15 and a memory 16.

The command 14 is made up of an identifier iD which is peculiar to the object, and is applied to each type of object 2 shown in FIG.16A. The link 15 is a pointer for pointing a real data or meta data of the memory 16. The link 15 includes an address data, a link data which is peculiar to the command and gives the link or the like to the real data, and a related data of the meta data which gives the link or the like to the meta data. The data peculiar to the command is an index or an instance data, for example. The memory 16 stores the real data which includes the data and the program (method), and the meta data. The meta data realizes a collection of objects or process flow by the command of each object, and is used to manage the conceptual model data and entity data.

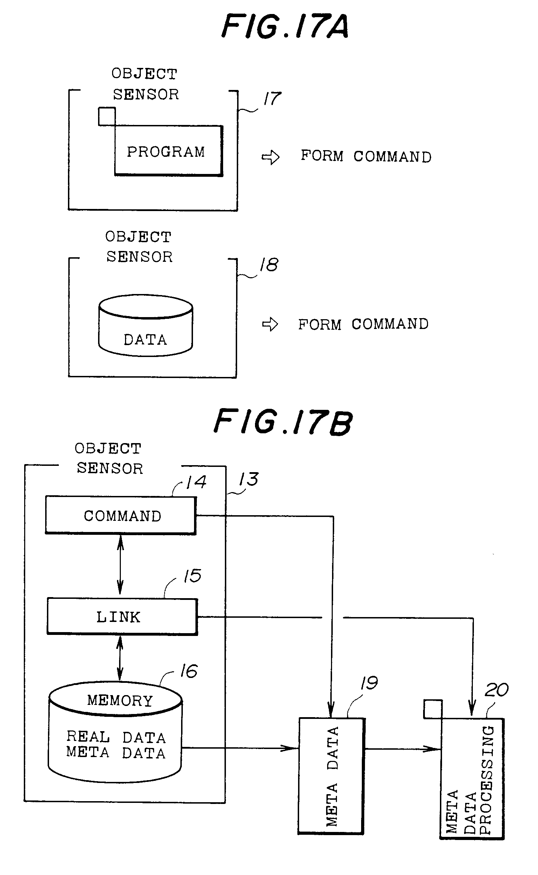

According to this embodiment, the program and the data are independently formed into objects as shown in FIG.17A and are subjected to a parts management by the command. Furthermore, an object of a higher level is formed by integrating objects of the capsule, the event, the system and the like, and a part is formed. A combination or sequence having as its element the command of an arbitrary object of such parts is managed by the command of the meta data. In addition, as shown in FIG.17B, the meta data itself is managed and processed as a part, similarly to other data, thereby enabling a complex logical model to be realized with ease.

In FIG.17B, the data of the memory 16 which is pointed by the link 15 of the object sensor model 13 may be a real data such as the program and data or a meta data. In the case of the real data, the data (instance) or the program (method) is extracted and processed according to the link data of the link 15. On the other hand, in the case of the meta data, the extracted meta data 19 is subjected to a meta data processing 20 by use of the link data of the link 15. The meta data processing 20 includes the operation of processing the object of the command of the link and extracting the real data.

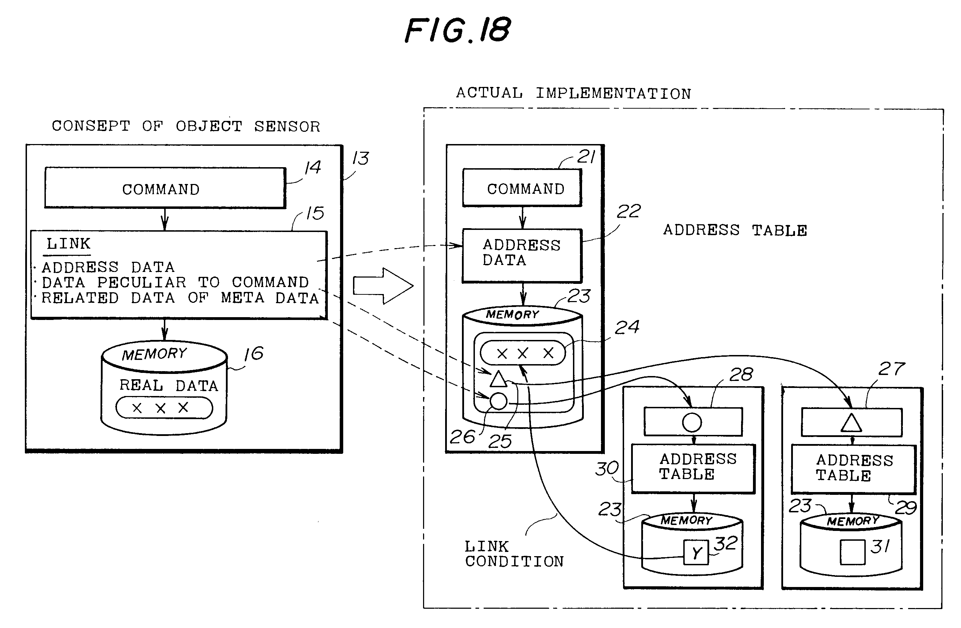

Next, a description will be given of the link process of the object using the meta data in this embodiment, by referring to FIG.18. In FIG.18, the left hand side shows the general concept of the object sensor which is the same as that shown in FIG.16B, and the right hand side shows a state where the object sensor is actually implemented in a computer.

In FIG.18, the object sensor model 13 including the command 14, the link 15 and the memory 16 is the same as that shown in FIG.16B. On the other hand, in the implemented state shown on the right hand side of FIG.18, there are shown commands 21, 27 and 28, address tables 22, 29 and 30, a memory 23, real data 24, 31 and 32, and meta data 25 and 26.

The command 14 and the link 15 are formed into the command 21 and the address table 22 in the actual implementation, and the link data within the link 15 and peculiar to the command and the related data related to the meta data are stored in the memory 23 as the meta data 25 and 26. Each meta data is extracted by pointing from the address table 22, and the target data is obtained by carrying out the meta data processing.

When running the object sensor of the command 21, an access is made to the memory 23 according to the address data of the address table 22 to read out the real data 24 and the meta data 25 and 26.

When the meta data 25 and 26 are read out, the meta data processing 20 shown in FIG.16B is next carried out. The meta data processing 20 is controlled by a kernel (not shown). The object sensor of the command 27 is called by the address data within the meta data 25, and the address table 29 is used to read out the real data 31 of the memory 23 so as to obtain the link data peculiar to the command, such as the keyword KW, name and comment. Similarly, the object sensor of the command 28 is called by the address data within the meta data 26, and the address table 30 is used to read out the real data 32 from the memory 23 so as to obtain a data Y which gives the link condition of the real data 24, for example. The data of the link 15 are all collected in this manner via the meta data, and the meta data processing 20 is ended.

The meta data may be divided roughly into a gathering meta data and sequence meta data.

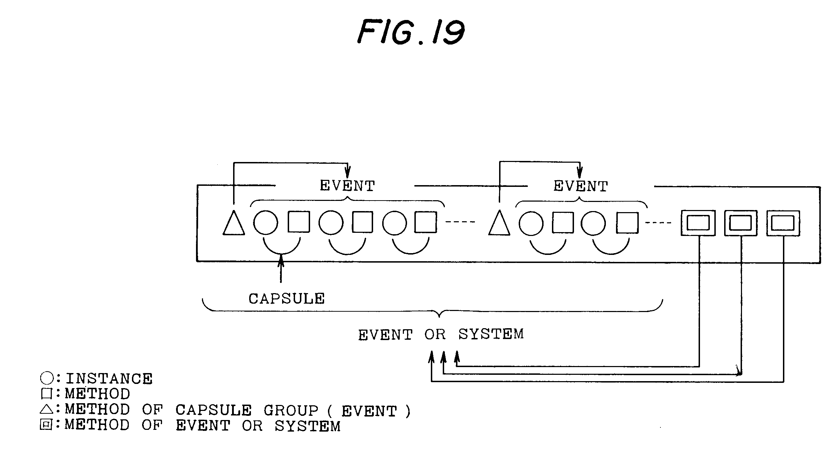

The gathering meta data has a structure suited for expressing a collection of primitive object groups. FIG.19 shows an embodiment of such a gathering meta data structure. As shown in FIG.19, the gathering meta data structure can express a multi-dimension hierarchical combination of an event which is a group of capsule objects made up of an instance object and a method object, a method object with respect to the event, a system object which is made up of a group of event objects, and a method object with respect to the event and the system object. The user who makes the design collects and registers each object of the parts according to a guideline and forms the meta data. This meta data in turn can further be utilized as a new part.

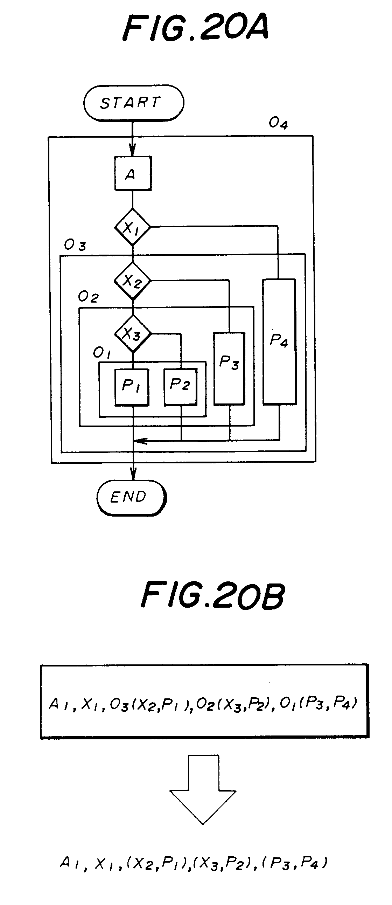

On the other hand, the sequence meta data has a data structure suited for expressing a process flow. FIG.20A shows an example of the process flow, and FIG.20B shows an embodiment of such a sequence meta data structure with respect to the process flow shown in FIG.20A.

In FIG.20A, A and P₁ through P₄ denote ordinary objects for carrying out an ordinary process, and X₁ through X₃ denote "if-then" objects for carrying out a decomposition control using "if-then".

In order to express this process flow shown in FIG.20A by the sequence meta data structure, each of the "if-then" objects X₁ through X₃ are extracted and formed into parts O₁ through O₄ as other-controlled objects. The other-controlled object indicates that the object to be executed is determined by the "if-then". The sequence meta data structure shown on the upper part of FIG.20B is obtained when the objects obtained above are arranged from the left to right. In the meta data shown in FIG.20B, the other-controlled objects O₁ through O₄ may be represented by the terms in brackets ( ) and can thus be written as shown on the bottom part of FIG.20B.

According to this embodiment, it is possible to simply set the link with respect to the program groups and data groups which are used as parts, even if the system structure is considerably complex, when building a system by combining a plurality of program groups and data groups in a computer or managing the program groups and data groups which form the built system. In addition, the system design and maintenance management are facilitated.

Next, a description will be given of a fourth embodiment of the object oriented processing method according to the present invention. As described above in conjunction with FIG.1 in particular, the conventional object oriented processing method expresses the phenomenon in the form of a simple capsule which is a combination of data and program. Hence, the object has the capsule as its unit. But the human understanding and thinking logic with respect to the real world is in multi levels, hierarchical and complex. For this reason, the object having the simple capsule structure and used in the conventional object oriented processing method lacks flexibility. This fourth embodiment provides a data structure and managing method which facilitate the expression of a complex phenomenon and are more adapted to the human thinking.

In this fourth embodiment, the program and the data are divided, and an identifier peculiar to the part is added to each part. This identifier will be referred to as a command (or code), and the parts are managed by the commands. A meta data is provided so that the meta data can combine and specify the commands as attributes, and the meta data are similarly managed by the peculiar commands. In other words, the meta data is treated as a part so as to eliminate the problems of the conventional object oriented processing method.

First, a description will be given of the operating principle of the fourth embodiment, by referring to FIGS.17A and 17B.

Unlike the concept of the object which is a combination of the program and the data and used in the conventional object oriented processing method as described above in conjunction with FIG.1, the program and the data in FIG.17A are treated independently as an object. Hence, the program and the data are respectively referred to as the object sensors 17 and 18.

The object sensors 17 and 18 are distinguishable by the respective commands (codes), and respectively include address pointers with respect to the program and the data. In this embodiment, it is possible to extract the program and the data from the memory by use of the address pointer, but it is also possible to extract the meta data and make a link to another object sensor based on the extracted meta data.

FIG.17B shows the link process of the meta data in this embodiment. The memory 16 stores the real data and the meta data. The meta data 19 is extracted from the memory 16. The link 15 includes the address data of the real data, which is made up of the memory address of the real data corresponding to the command and the area (size) data. Although not directly related to the memory data, the link 15 also includes the link data which is peculiar to the command and has a kind of keyword function describing the character of the correspondence of the command and the memory data, and the related link data of the real data or the meta data stored in the memory 16. The related link data of the meta data includes information indicating the real data or the behavior of the meta data itself if the link is made to the meta data, and information indicating the relationship between the meta data. The meta data 19 has the sequence structure or the structure made up of a collection of primitive objects.

The data of the memory 16 pointed by the link 15 of the object sensor 13 may be the real data such as the program and data, or may be the meta data. In the case of the real data, the data (instance) or the program (method) is extracted and processed. On the other hand, in the case of the meta data, the extracted meta data 19 is subjected to the meta data processing 20 by use of the related link data of the meta data in the link 15 and described above. The meta data processing 20 carries out an operation such as processing the object of the command of the linking part, and extracting the real data.

According to this embodiment, the program and the data are independently formed into the objects and are subjected to the parts management by the commands. In addition, the object is integrated with an object group of capsules, events, systems and the like and formed into a part. The command of the meta data manages the combination or sequence having as its element an arbitrary command of the object of such a part. Moreover, because the meta data itself can be managed as a part similarly to other data, it becomes possible to build a complex logical model with ease.

A more detailed description of this fourth embodiment will be omitted because the operation of the third embodiment is basically the same as that of the second embodiment described in injunction with FIGS.17 through 20.

Further, the present invention is not limited to these embodiments, but various variations and modifications may be made without departing from the scope of the present invention.

Reference signs in the claims are intended for better understanding and shall not limit the scope.

## Claims

1. An object oriented processing method characterized in that there are provided the steps of:
(a) forming first objects which respectively include a single capsule in which a data and a method are integrated, a single data, a single method, a single event in which a plurality of capsules are integrated, a single system in which a plurality of events are integrated, and a single sequence which expresses a sequence of a plurality of events and systems; and
(b) expanding the first objects to form a second object which is made up of an arbitrary combination of a plurality of first objects.

2. The object oriented processing method as claimed in claim 1, characterized in that there is further provided the step of:
(c) carrying out an innovation/version management by storing all related objects if at least one of the first and second objects is changed, added or deleted.

3. The object oriented processing method as claimed in claim 2, characterized in that said step (c) forms a link by adding a condition or rule between past data and present data.

4. The object oriented processing method as claimed in claim 1, characterized in that the first objects are stored in a parts repository in a retrievable manner and in a primitive part form, the second object is made up of the first objects which are connected in a sequence, and said object oriented processing method further comprises the steps of:
(c) making a simulation by executing the second object depending on the sequence;
(d) changing the sequence of the second object or changing the object of a used part if a result of the simulation in said step (c) does not satisfy a predetermined demand;
(e) registering the second object in the parts repository as a new part if the result of the simulation in said step (c) satisfies the predetermined demand; and
(f) operating the second object in a computer by use of a kernel object.

5. The object oriented processing method as claimed in claim 4, characterized in that the kernel object includes a sequence table, and first and second developing functions for developing the second object the simulation of which has been made in the sequence table, said first developing function assembling the first object of each element forming the second object as a subroutine, said second developing function assembling the first object of each element forming the second object as a task within a program.

6. The object oriented processing method as claimed in claim 5, characterized in that said kernel object at the time of program execution first loads the program developed by the second developing function into a work area of a memory to execute the program, and the program developed by the second developing function is executed while swapping the subroutine if the program developed by the first developing function cannot be loaded due to insufficient memory space.

7. The object oriented processing method as claimed in claim 1, characterized in that each of the second objects take an object sensor model format which includes a command for identifying the object, a data stored in a memory, and a link to the data.

8. The object oriented processing method as claimed in claim 7, characterized in that:
the link of the second object which takes the object sensor model format includes an address pointer to the memory data, a data peculiar to the command and related data of a meta data,
the data peculiar to the command and the related data of the meta data are expressed by a meta data and stored in the memory together with a real data, and
the meta data and the real data are extracted from the memory via the link by the address pointer.

9. The object oriented processing method as claimed in claim 8, characterized in that the data peculiar to the command is an index or an instance data, and the related data of the meta data expresses a link to the real data.

10. The object oriented processing method as claimed in claim 1, characterized in that there are further provided the steps of:
(c) managing the first objects which include at least a program group and a data group by identifying the first objects by a command peculiar to each first object;
(d) forming a meta data which expresses a structure formed by a plurality of commands and managing the meta data as a first object in an identifiable manner by a command peculiar to the meta data; and
(e) managing the combination and a sequence of the first objects of the second object by use of the meta data.

11. The object oriented processing method as claimed in claim 10, characterized in that the meta data includes a command which identifies the meta data, and a pointer to the command of each element to be expressed by the meta data.

12. A program execution system which is implemented on a computer and processes an object oriented program, characterized in that said program execution system comprises:
a parts repository (43) for storing primitive objects in a retrievable manner and in a primitive part form;
means (45) for forming a composite object by connecting the primitive objects extracted from said parts repository in a sequence;
simulation means (46) for simulating an execution of the composite object according to the sequence thereof;
program correction means (53, 46) for changing the sequence of the composite object or changing the object of a used part if a result of the simulation does not satisfy a predetermined demand;
registration means (52) for registering the composite object in said parts repository as a new part if the result of the simulation satisfies the predetermined demand; and
a kernel object (47, 48, 54) for operating the composite object in the computer.

13. The program execution system as claimed in claim 12, characterized in that said kernel object (47, 48, 54) includes a sequence table (48), and first and second developing functions (54) for developing the composite object the simulation of which has been made in the sequence table, said first developing function (54) assembling the object of each element forming the composite object as a subroutine, said second developing function (54) assembling the object of each element forming the composite object as a task within a program.

14. The program execution system as claimed in claim 13, characterized in that said kernel object (47, 48, 54) at the time of program execution first loads the program developed by the second developing function (54) into a work area of a memory (55) to execute the program, and the program developed by the second developing function (54) is executed while swapping the subroutine if the program developed by the first developing function cannot be loaded due to insufficient memory space.

15. A data management method implemented in a computer and characterized in that there are provided the steps of:
(a) managing parts of parts groups which include at least a program group and a data group by identifying the parts by a command peculiar to each part;
(b) forming a meta data which expresses a structure formed by a plurality of commands and managing the meta data as a part in an identifiable manner by a command peculiar to the meta data; and
(c) managing a combination of arbitrary parts and a sequence of parts by use of the meta data.

16. The data management method as claimed in claim 15, characterized in that the meta data includes a command which identifies the meta data, and a pointer to the command of each element to be expressed by the meta data.
